# EUROPEAN PATENT APPLICATION

(11) **EP 1 380 354 A1**
(43) Date of publication of application: **14.01.2004**
(21) Application number: 02713172.1
(22) Date of filing: 20.03.2002
(51) Int. Cl.: B05D 5/00

(54) **METHOD FOR FORMING ANTIFOULING COATING AND ANTIFOULING MATERIAL HAVING ANTIFOULING COATING**

(30) Priority: 21.03.2001 JP 2001128462; 13.04.2001 JP 2001115811; 17.04.2001 JP 2001118169
(71) Applicant: BRIDGESTONE CORPORATION, Tokyo 104-0031 (JP)
(72) Inventor: HIRATA, Narukuni, Kodaira-shi, Tokyo 187-0031 (JP); NAKAZAWA, Kazuma, Kawasaki-shi, Kanagawa 214-0012 (JP); IZUMOTO, Ryuji, Kokubunji-shi, Tokyo 185-0011 (JP); IWASAKI, Shinichi, Suginami-ku, Tokyo 166-0003 (JP); SUGIO, Daisuke, Kodaira-shi, Tokyo 187-0031 (JP); INO, Fumitaka, Nishitokyo-shi, Tokyo 188-0004 (JP)
(74) Representative: Staudt, Hans-Peter, Dipl.-Ing.
(86) International application number: PCT/JP2002/002648
(87) International publication number: WO 2002/074451

(57) **Abstract**

The present invention provides a process for forming an antifouling coating containing a photocatalyst and amorphous titanium peroxide with substantially no photocatalytic capability provided on a treatment face of a substrate having a surface made of a plastic or a rubber, including a step of performing dry treatment for introducing a hydrophilic group to the treatment face of the substrate, and a step of forming the antifouling coating by applying an aqueous coating agent containing the photocatalyst and the amorphous titanium peroxide with substantially no photocatalytic capability to the treatment face of the substrate after the dry treatment. It is preferable that the above-mentioned dry treatment is a plasma discharge treatment, corona discharge treatment or ultraviolet irradiation treatment. The present invention also provides an antifouling material having an antifouling coating formed by the process for forming an antifouling coating of the present invention.

## Description

### [Technical Field]

The present invention relates to a process for forming an antifouling coating comprising a photocatalyst and amorphous titanium peroxide having substantially no photocatalytic capability provided on a substrate having a surface comprising a plastic or a rubber, and an antifouling material having an antifouling coating prepared by this method.

### [Background Art]

When ultraviolet radiation or a visible ray is irradiated to a photocatalyst such as titanium oxygen, active oxygen is formed on the surface of the photocatalyst. Therefore, it becomes possible to disintegrate (decompose) a germ, an organic material such as oil, and inorganic gas such as nitrogen oxide by the active oxygen. Moreover, hydrophilic groups which are miscible with water are increased on the surface of the photocatalyst, water spreads over the photocatalyst, and the water will cause stain or the like to rise to the surface. Accordingly, a wide range of study is made for using the photocatalyst for the purpose of purification of air, deodorization, purification of water, antibacterial treatment, and self-cleaning.

It has been found, however, there are such problems that the adhesive properties between a photocatalyst and a plastic or a rubber is poor and a plastic or a rubber itself is decomposed by the effect of a photocatalyst when the photocatalyst is supported on a substrate made of a plastic or a rubber. Therefore, a coating material with improved adhesive properties is desired which protects a plastic or a rubber from being decomposed by the photocatalyst.

JP-A-7171408 discloses a method for adhering a photocatalyst to a substrate by use of an inorganic binding agent such as water glass or colloidal silica, or an organic binding agent such as a silicone-based polymer, as a coating agent for solving the above-mentioned problems. By this method, however, the photocatalyst is embedded in the binding agent and the decomposing function of the photocatalyst cannot be attained sufficiently. Moreover, it is considered that the silicone-based polymer does not satisfactorily restrict the deterioration of a plastic or a rubber. Furthermore, a coating agent mainly based on silica such as colloidal silica has to be heated to a fusing temperature of silica, i.e., 500°C or more for obtaining a sufficient strength of the coating. Because of this, the coating agent cannot be used for a substrate made of a plastic or a rubber having a low softening point which is not tolerant to such temperature. Particularly when the coating agent is used outdoors, which has been heated at a temperature less than the fusing temperature of silica, it is considered that there is such a problem that a sufficient strength of the coating cannot be obtained.

JP-A-9262481 discloses a coating comprising a photocatalyst and amorphous titanium oxide sol. The publication describes that the amorphous titanium peroxide sol is excellent in the viewpoints of adhesive properties to a substrate and prevention of decomposition by the photocatalyst. Moreover, JP-A-10053437 discloses a method for coating amorphous titanium peroxide, followed by adhering a photocatalyst, which is dispersed in a gas, to the amorphous titanium peroxide layer.

### [Problems to be solved by the Invention]

However, it is difficult to form a coating which is uniformly and firmly adhered to the substrate when the coating agent is applied to a plastic or a rubber. This is because the coating agent comprising the amorphous titanium peroxide sol is an aqueous coating agent, and water and a plastic, or water and a rubber have a poor adaptability to each other.

As a countermeasure to this problem, JP-A-2000280397 discloses a coating liquid for an intermediate coating comprising a titanium peroxide or a surfactant such as a nonion surfactant or a silicone surfactant, which is used when an anatase titanium oxide dispersion comprising titanium peroxide is applied to a substrate of an organic material. It is mentioned that the coating liquid for an intermediate coating has excellent affinity with respect to the substrate of an organic material before drying, and exhibit hydrophilic property after drying, and that the coating liquid has excellent conformity with the aqueous coating agent (titanium oxide dispersion). However, there are problems. For examples, the manufacturing cost is increased when a surfactant is added. Moreover, satisfactory contamination prevention effect by the photocatalyst cannot be obtained since the adhesion uniformity is poor and firm adhesive force cannot be obtained, although adhesive force between the aqueous coating agent and a plastic or a rubber is slightly improved.

It is therefore an object of the present invention to provide a process for forming a coating wherein a coating uniformly and firmly adhered to a surface of a plastic or a rubber can be formed by forming an antifouling coating by use of an aqueous coating comprising a photocatalyst and amorphous titanium peroxide on a substrate having a surface made of a plastic or a rubber.

In addition to the above, another object of the present invention is to provide an antifouling material having an antifouling coating wherein an antifouling coating comprising a photocatalyst and amorphous titanium peroxide is uniformly and firmly adhered to a surface of a plastic or a rubber.

### [Means to solve the problems]

As a result of a diligent study of the inventors, the present invention has been completed by finding a process for forming an antifouling coating comprising a photocatalyst and amorphous titanium peroxide with substantially no photocatalytic activity to be provided on a treatment face of a substrate having a surface comprising a plastic or a rubber, characterized by comprising a step of performing a dry treatment for introducing a hydrophilic group to the treatment face of the substrate, and a step of forming an antifouling coating by applying an aqueous coating agent comprising a photocatalyst and amorphous titanium peroxide with substantially no photocatalytic capability to the treatment face after the dry treatment. Furthermore, it is possible that the step for forming the antifouling coating comprises a step of forming a first coating by applying an aqueous coating agent comprising the amorphous titanium peroxide with substantially no photocatalytic activity to the treatment face after the dry treatment, and a step of forming a second coating by applying an aqueous coating agent comprising the photocatalyst on the first coating.

So far as the present invention is concerned, the term "antifouling coating" includes a coating which can perform a contamination prevention by itself (self-cleaning, or antibacterial effect), and a coating which prevents ambient atmosphere from being polluted, such a coating having air-pollution prevention effect, deodorization effect, or water purification effect. Furthermore, the terms "treatment face" refer to a part where the antifouling coating is applied, that is, an entire surface or a part of the surface of the substrate made of a plastic or a rubber. According to the process for forming a coating of the present invention, a dry treatment is performed for introducing a hydrophilic group with a large reactivity to the surface of the plastic or the rubber substrate, followed by coating an aqueous coating agent comprising a photocatalyst and amorphous titanium peroxide with substantially no photocatalytic capability. Therefore, the aqueous coating agent has a good adaptability to the plastic or the rubber well, and a coating can be formed which is uniformly and firmly adhered to the treatment face and which exhibits an excellent photocatalytic effect and improved hydrophilic nature and good weather resistance. Further, the plastic or the rubber on the surface of the substrate can never be decomposed by the photocatalyst.

It is possible that the above-mentioned first coating further comprises amorphous titanium oxide with substantially no photocatalytic capability in addition to the above-mentioned amorphous titanium peroxide. Furthermore, it is also possible that the above-mentioned second coating further comprises amorphous titanium peroxide with substantially no photocatalytic capability in addition to the photocatalyst. It is preferable that the thicknesses of the first coating and the second coating is in the range of 0.02 to 4 µm. It is preferable to use titanium oxide which is excellent as regards photocatalytic capability. When anatase titanium oxide sol as a photocatalyst and amorphous titanium peroxide sol without photocatalytic capability are used, a coating which is uniformly and firmly adhered to the treatment face having not only an excellent photocatalytic activity, hydrophilic nature and an excellent weather resistance, but also good smoothness and transparency. The antifouling coating may further comprise a surfactant and/or a hydrophilic nature-imparting agent.

It is preferable that the above-mentioned dry treatment is any of plasma discharge treatment, ultraviolet irradiation treatment, and corona discharge treatment. It is preferable to perform the plasma discharge treatment under argon, oxygen or nitrogen atmosphere. It is preferable to perform ultraviolet irradiation treatment by use of an ultraviolet radiation having a wavelength in the range of 150 to 365 nm, and ultraviolet irradiation treatment under water vapor atmosphere or ozone atmosphere. In particular, it is preferable to perform ultraviolet irradiation treatment after water is applied to the treatment face.

It is preferable to perform corona discharge treatment by using a corona discharge treatment apparatus wherein one of two electrodes is covered with an insulating material, and both the two electrodes are provided in the vicinity of the treatment face to each other, and by bringing a corona, which generates by the application of high-frequency voltage between the two electrodes, into contact with the treatment face. In this way, it is possible to preferably apply corona discharge treatment to a surface of a large-sized substrate which is non-conductive and thick. In this case, it is preferable that the distance between the two electrodes is 1 to 5 mm, and that the high-frequency voltage is applied between the two electrodes with frequency of 15 to 50 kHz, and voltage of 5 to 25 kV.

The present invention also provides an antifouling material comprising a substrate having a surface of a plastic or a rubber, and a antifouling coating comprising a photocatalyst and amorphous titanium peroxide with substantially no photocatalytic capability provided on a treatment face of the substrate, characterized in that the antifouling coating is formed by the above-mentioned process for forming the coating. As the substrate, it is possible to use a tire or a wheel for an automobile having a plastic coating (particularly, a coating made any of acrylic resin, fluoroplastics or a mixture thereof) on the surface. An antifouling material (a tire or a wheel for an automobile to which an antifouling coating is applied) can decompose a poisonous gas such as nitrogen oxides contained in exhaust gas of an automobile, and can be prevented from being stained by soot and smoke in the exhaust gas.

### [Embodiments]

The present invention will now be explained in detail by referring to figures. The invention is not limited to the explanation below.
Fig. 1 is a schematic diagram for showing an apparatus for a plasma discharge treatment;
Fig. 2 is a schematic diagram for showing an apparatus for an ultraviolet irradiation;
Fig. 3 is a schematic diagram for showing an apparatus for corona discharge treatment;
Fig. 4(a) shows a process of forming an antifouling coating comprising a photocatalyst and amorphous titanium peroxide after dry treatment; and Fig. 4(b) is a cross section of a substrate and an antifouling coating after the antifouling coating being formed by the step of Fig. 4(a);
Fig. 5(a) is a diagram for showing a process of forming a first coating comprising amorphous titanium peroxide, and a second coating comprising a photocatalyst after dry treatment; and Fig. 5(b) is a cross section of a substrate and an antifouling coating after an antifouling coating being formed by the step of Fig. 5(a);
Fig. 6(a) is a diagram for showing a plasma discharge treatment process applied to a wheel of an automobile; and Fig. 6(b) is a diagram for showing a wheel for an automobile after an antifouling coating being formed by the step of Fig. 6(a);
Fig. 7(a) is a diagram for showing a corona discharge treatment process to a side part of a tire; and Fig 7(b) is a diagram for showing a tire after an antifouling coating being formed.

The process for forming an antifouling coating according to the present invention is applied to a substrate having a surface made of a plastic or a rubber. Firstly, it is possible to use a substrate entirely made of one or more plastic or rubber, hence having a surface thereof made of the plastic or the rubber, such as an acrylic board (sheet) or a tire. Moreover, it is possible to use a substrate of which surface and only the vicinity thereof is made of a plastic or a rubber, for example, a wheel for a car body of an automobile, two-wheeled vehicle or the like which has a plastic coating on the surface, or a wooden material, metallic material or a glass article which has a plastic or a rubber coating layer on the surface. Moreover, it is possible that only a part of the substrate surface is made of a plastic or a rubber.

There is no particular limitation to the kind of the plastic or the rubber for forming the surface of the substrate, to which the process for forming the coating of the invention is applied. The process for forming the coating of the present invention is applicable to all substrates having surfaces made of widely used thermoplastic resins such as polyethylene, polypropylene and polystyrene, thermoplastic resins as an engineering plastics such as polyamide, polyacetal and polycarbonate, thermosetting resins, such as phenol resin, urea resin and melamine resin, widely used rubbers such as isoprene rubber, butadiene rubber, styrene/butadiene rubber, special rubbers such as chloroprene rubber, acrylonitrile/butadiene rubber and acrylic rubber, and styrene-based, olefin-based and urethane-based thermoplastic elastomers. Furthermore, the process for forming the antifouling coating of the present invention is applicable to an entire surface made of a plastic or a rubber, or to a part of the surface.

In accordance with the process for forming the coating of the invention, firstly, dry treatment is carried out for introducing a hydrophilic group with a high reactivity to the treatment face. Here, it is possible to perform the dry treatment after an undercoat layer of an acrylic resin or the like is formed on the surface of the substrate, by using the surface of the undercoat layer as the treatment face. Any treatment is used as the dry treatment as long as a hydrophilic group having a high reactivity can be introduced to the treatment face. Examples of the dry treatment include plasma discharge treatment, corona discharge treatment, ultraviolet irradiation treatment, ozone treatment, and flame treatment. In particular, it is preferable to use a plasma discharge treatment, corona discharge treatment and ultraviolet irradiation treatment since many hydrophilic groups with a high reactivity can be introduced with the treatment face being maintained clean. Based on the collision of electrons, which are generated by the plasma discharge treatment, corona discharge treatment and ultraviolet irradiation treatment, to the treatment face, or based on the function of secondary generated ozone or ultraviolet radiation (ultraviolet radiation secondary generates by the plasma discharge treatment and corona discharge treatment.), a hydrophilic group such as carboxyl group, carbonyl group and hydroxyl group with high reactivity generates on the treatment face. Accordingly, wettability and reactivity of the surface are improved. By this reason, a coating uniformly and firmly adhered to the treatment face is formed when the aqueous coating is applied to the treatment face which has been subjected to the dry treatment. Processes based on the plasma discharge treatment, corona discharge treatment and ultraviolet irradiation treatment will be explained below.

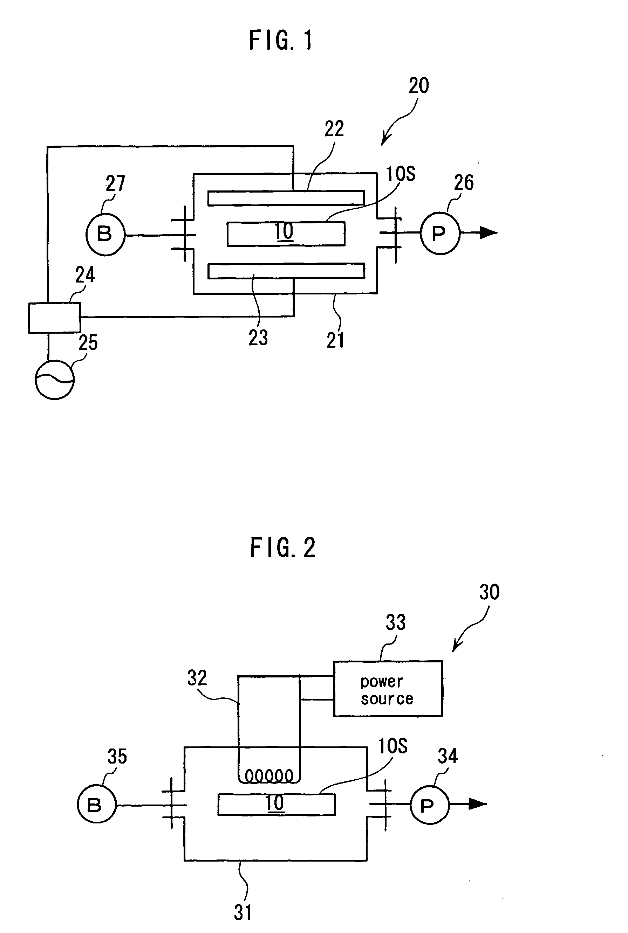

Fig. 1 is a schematic diagram of an apparatus for a plasma discharge treatment. A plasma discharge treatment apparatus 20 comprises a chamber 21. The chamber 21 comprises therein a first electrode 22 provided in the vicinity of a treatment face 10S of a substrate 10, and a second electrode 23 provided on an opposite side to the first electrode 22 with respect to the treatment face 10S. A power source unit 25 having a high-voltage transformer 24 is provided outsides the chamber 21, with the power source unit 25 being connected between both the electrodes 22 and 23. A vacuum pump 26 and a gas cylinder 27 are connected to the chamber 21 for making it possible to exchange surrounding gas in the chamber 21.

The substrate 10 with the treatment face 10S is positioned in the chamber 21, and surrounding gas in the chamber 21 is exchanged. Thereafter, high voltage is applied between the first electrode 22 and the second electrode 23 to generate a plasma between both the electrodes 22 and 23. The gas is activated and the treatment face 10S is uniformly subjected to the plasma discharge treatment.

The surrounding gas for use in the plasma discharge treatment is Ar, O₂, CO, CO₂, N₂, NO, NO₂, NH₃, air (O₂+CO₂+N₂ , etc) or the like. There is no limitation to the gas as long as the gas can introduce a hydrophilic group with large reactivity to the treatment face. Ar, O₂ and N₂ are preferably used. The degree of vacuum in the chamber during the plasma treatment is set to be in the range of 10 to 0.1 torr, preferably in the range of 1 to 0.1 torr. Treating time in the range of 1 to 60 minutes is preferable.

Fig. 2 is a schematic diagram of an apparatus for ultraviolet irradiation treatment. An ultraviolet irradiation treatment apparatus 30 comprises a chamber 31. An ultraviolet irradiation light source 32 is provided inside the chamber 31, and a power source for the light source 33, which is connected to the ultraviolet irradiation light source 32 is provided outside the chamber 31. A vacuum pump 34 and a gas cylinder 35 are connected to the chamber 31 for making it possible to exchange surrounding gas in the chamber 31.

A substrate 10 with a treatment face 10S is positioned in the chamber 31, and surrounding gas in the chamber 31 is exchanged. Thereafter, the treatment face 10S is uniformly subjected to ultraviolet irradiation treatment by irradiating ultraviolet radiation by transferring the ultraviolet irradiation light source 32 with maintaining a predetermined distance between the ultraviolet irradiation light source 32 and the treatment face 10S.

As a surrounding gas for use in the ultraviolet irradiation treatment, air, water vapor, and ozone are preferable. Moreover, it is possible to increase a hydrophilic nature imparting efficiency on the treatment face, when ultraviolet irradiation treatment is carried out after applying water to the treatment face. It is preferable that the ultraviolet radiation emitted from the ultraviolet irradiation light source 32 has a wavelength in the range of 150 to 365 nm. When the wavelength is 365 nm or more, it is not possible to sufficiently make the treatment face hydrophilic. On the other hand, it is difficult to obtain ultraviolet radiation with a wavelength of 150 nm or less from a widely used UV lamp. As the ultraviolet irradiation light source 32, a low pressure UV lamp is preferably used. Such low pressure UV lamp emits two radiations with short wave lengths of 254 nm and 184.9 nm, whose emission energy is extremely large and suitable for making the treatment face hydrophilic.

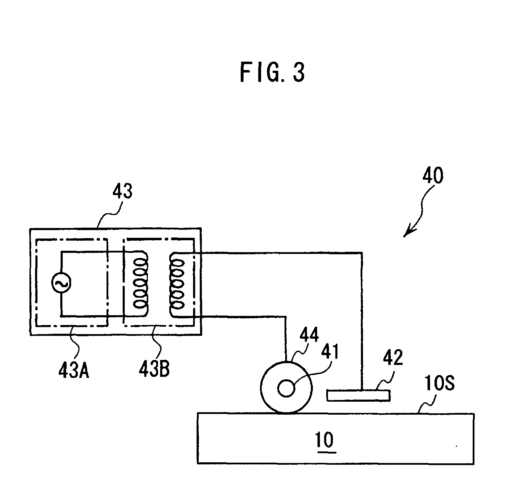

For corona discharge treatment, a commonly used apparatus for corona discharge treatment can be used, wherein a substrate is positioned between a discharge electrode an a counter electrode which oppose to each other. Moreover, it is possible to use a corona discharge treatment apparatus as shown in Fig. 3 wherein one of two electrodes is covered with an insulating material, and both the two electrodes are provided in the vicinity of the treatment face. Corona discharge treatment is performed so as to make a generated corona contact with the treatment face by applying a high-frequency voltage between the two electrodes. This method is preferable, since surface treatment can be applied even to a non-conductive and thick, large sized substrate.

A corona discharge treatment apparatus 40 of Fig. 3 includes a first electrode 41 made of a stainless steel bar covered with a covering member 44 in the shape of a roller. The first electrode 41 is provided in the vicinity of a treatment face 10S of a substrate 10 and can move on the treatment face 10S with rotating thereon. The corona discharge treatment apparatus 40 further includes a second electrode 42 made of a stainless steel plane plate provided in the vicinity of first electrode 41 on the same side as the first electrode 41 with respect to the treatment face 10S. The corona discharge treatment apparatus 40 also includes a high-voltage generator 43 connected to both the electrodes 41 and 42, having a high-frequency generator 43A and a high-voltage transformer 43B. The above-mentioned covering member 44 is made of a silicone rubber, natural rubber or a ceramic material.

The corona discharge treatment is carried out by applying a high-frequency high-voltage so as to generate a corona between both the electrodes 41 and 42 after the substrate 10 having the treatment face 10S is positioned. The second electrode 42 moves on the treatment face 10S with the rotation of the above-mentioned covering member 44, by maintaining a predetermined distance between the first electrode 41 and the second electrode 42. Therefore, the corona generated between the first electrode 41 and the second electrode 42 moves along the treatment face 10S, whereby the treatment face 10S is uniformly treated by corona discharge treatment. It is preferable that the distance between the first electrode 41 and the second electrode 42 is in the range of 1 to 5 mm, and that the high-frequency voltage to be applied has frequency f = 15 to 50 kHz, voltage V = 5 to 25 kV, and output P =10 to 1000 W. As an surrounding gas, air is used. Oxygen may also be used.

The surface can be made hydrophilic by the above-mentioned dry treatment preferably to such a degree that the contact angle of water is in the range of about 10 to 40° . The reasons are as follows. The contact angle of water of 40° or more repels water, so that it is difficult to obtain a uniform coating. On the other hand, when the contact angle of water is 10° or less, film formation by an aqueous coating agent becomes difficult.

According to the process for forming a coating of the present invention, an antifouling coating is formed by subsequently applying an aqueous coating comprising a photocatalyst and amorphous titanium peroxide with substantially no photocatalytic capability, to the treatment face after the dry treatment.

As an embodiment of the present invention, the antifouling coating is prepared as one single coated layer comprising a photocatalyst and amorphous titanium peroxide.

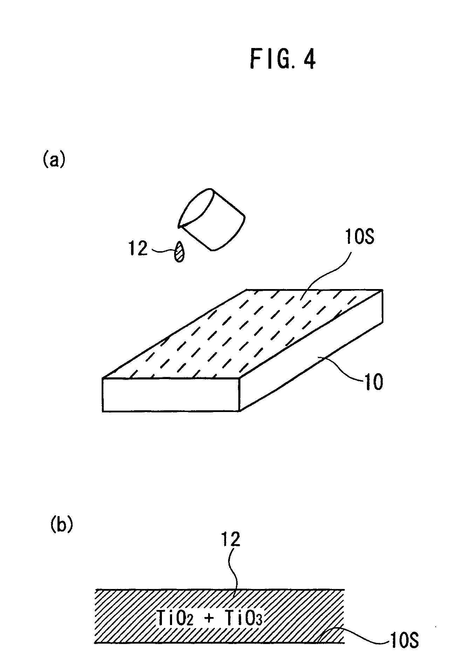

Fig. 4(a) is a diagram for showing a step for forming a layer of antifouling coating comprising a photocatalyst and amorphous titanium peroxide. An aqueous coating 12 comprising a photocatalyst and amorphous titanium peroxide is applied to the treatment face after dry treatment by known methods such as spray coating, dip coating, flow-coating, roll coating and brushing. Fig. 4(b) is a cross section of the substrate and the antifouling coating after application of antifouling coating by the step of Fig. 4(a).

As an aqueous coating containing amorphous titanium peroxide used for forming the above-mentioned antifouling coating, amorphous titanium peroxide sol is preferably used in the view-point of film forming properties. The amorphous titanium peroxide sol can be manufactured in accordance with known methods. For instance, amorphous titanium hydroxide Ti(OH)₄, which has been generated by adding alkali hydroxide such as sodium hydroxide to an aqueous solution of titanium salt such as titanium tetrachloride TiCl₄, is washed, separated, and then treated with an aqueous hydrogen peroxide, whereby amorphous titanium peroxide sol is obtained. The amorphous titanium peroxide sol is not crystallized in the form of an anatase titanium oxide at room temperature. The amorphous titanium peroxide sol has extremely outstanding properties such as an excellent bonding properties, high film forming properties, and a uniform, smooth and thin film forming capability; and non-soluble characteristics and stability to the photocatalyst of the coating after drying.

As the photocatalyst contained in the above-mentioned antifouling coating, it is possible to use known inorganic photocatalysts such as anatase titanium oxide, rutile titanium oxide, zinc oxide, tin oxide, bismuth dioxide, strontium titanate, barium titanate, cadmium sulfide, silicon carbide, and molybdenum disulfide, without any limitation. It is preferable to use anatase titanium oxide and rutile titanium oxide. It is particularly preferable for forming the coating to use anatase titanium oxide sol. This is because anatase titanium oxide sol liquid can form an extremely smooth surface when a contacting counterpart is hydrophilic. The anatase titanium oxide sol is prepared by heating the above-mentioned amorphous titanium peroxide sol to a temperature of 100°C or more. Moreover, the above-mentioned photocatalyst is commercially available.

By using the coating agent obtained by mixing the photocatalyst and the amorphous titanium peroxide, the amorphous titanium peroxide functions as a binder, and will exist around the photocatalyst. Therefore, it is possible to prevent the decomposition of a plastic or a rubber by the photocatalyst. It is preferable that the ratio of the amorphous titanium peroxide to the photocatalyst is in the range of 4/1 to 1/4. When the amount of the photocatalyst is too large, it is difficult to completely prevent a plastic or a rubber from being decomposed, while when the amount of the amorphous titanium peroxide is too large, it is not possible to obtain an antifouling coating with a sufficient photocatalytic capability

Moreover, in an another embodiment of the present invention, a first coating is formed by applying an aqueous coating agent comprising a amorphous titanium peroxide after the above-mentioned dry treatment, and then, a second coating is formed by applying a second coating to the first coating by applying an aqueous coating agent comprising a photocatalyst.

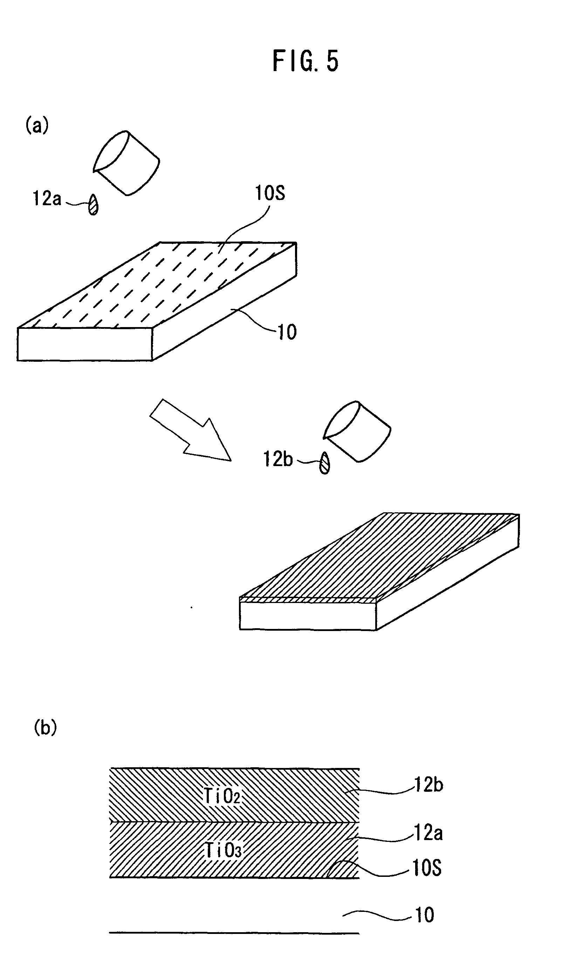

Fig. 5(a) is a diagram for showing a step for preparing a first coating comprising amorphous titanium peroxide and a second coating comprising a photocatalyst. First, an aqueous coating agent 12a comprising amorphous titanium peroxide is applied to a treatment face 10S after dry treatment by a known method such as spray coating, dip coating, flow-coating, roll coating and brushing. After drying, an aqueous coating agent 12b comprising a photocatalyst is applied by a known method such as spray coating, dip coating, flow-coating, roll coating and brushing, if necessary. Fig. 5(b) is a cross section of the substrate and the antifouling coating after the formation of the antifouling coating by the process in Fig. 5(a).

This embodiment for forming the first and second coatings is preferable, for example, when the adhesive property between the antifouling coating and the treating surface should be improved, when the treating surface should be prevented from deterioration by the effect of the photocatalyst, and when the hydrophilic nature of the antifouling coating should be maintained.

It is preferable that the amorphous titanium peroxide contained in the first coating in this method is the above-mentioned amorphous titanium peroxide sol. The first coating can contain a mixture of amorphous titanium peroxide and amorphous titanium oxide. It is preferable that the ratio of amorphous titanium peroxide to amorphous titanium oxide is 1/1 or more. This is because the adhesive properties with respect to a plastic and a rubber are decreased or it is difficult to completely prevent the plastic or the rubber from decomposing, when the amount of amorphous titanium peroxide is too small. The thickness of the first coating is generally in the range of 0.02 to 4.0 µm, preferably in the range of 0.1 to 2.0 µm, most preferably 0.2 to 0.5 µm. The thinner the first coating, the larger the adhesive force with respect to the treatment face. The first coating is formed as a layer with high wear resistance and good transparency when the layer is thin.

It is possible to use the afore-mentioned inorganic photocatalyst as the photocatalyst in the second coating. The second coating may comprise the above-mentioned amorphous titanium peroxide in addition to the photocatalyst. It is preferable that the ratio (based on mass) of amorphous titanium oxide to the photocatalyst is 4/1 or less. This is because the antifouling layer with a sufficient photocatalytic capability cannot be obtained when the amount of the photocatalyst is too small. The thickness of the second coating is generally in the range of 0.02 to 4.0 µm, preferably in the range of 0.1 to 2.0 µm, most preferably 0.3 to 1.0 µm. The thinner the second coating, the larger the adhesive force with respect to the first coating. The second first coating is formed as a layer with high wear resistance and good transparency when the layer is thin.

The antifouling coating formed by the process for forming the coating of the present invention may further contain a surfactant and or a hydrophilic nature imparting agent. Examples of the surfactant are nonionic surfactant ("Cleanthrough" manufactured by Kao Corp.), anionic surfactant ("SUNNOL" manufactured by Lion Corporation) and the like. As the hydrophilic nature imparting agent, n-methylpyrrolidone, and silicon oxides, for instance, silicon dioxide such as colloidal silica, siloxane compound and water-glass can be used.

It is possible to add a metal such as Ag, Cu and Zn for imparting antibacterial effect to the antifouling coating formed by the process for forming the coating of the present invention. It is also possible to add a metal of platinum group such as Pt, Pd, Ru, Rh and Ir. By adding such metal of platinum group, it is possible to strengthen the redox activity of the photocatalyst. Hence, it is possible to preferably promote decomposition of stain, poisonous gas and bad smell.

According to the process for forming the antifouling layer of the present invention, a coating is prepared which is uniformly and strongly adhered to the surface of a plastic or a rubber, having an excellent photocatalytic capability, good hydrophilic nature, and weather resistance. Moreover, the plastic or rubber on the surface of the substrate does not deteriorate by the photocatalyst. When titanium oxide sol as a photocatalyst is used together with amorphous titanium peroxide sol without photocatalytic capability, a smooth coating with excellent transparency can be formed.

In the following cases,wettability, contact angle, and degree of stain of an undercoat layer are observed, and the results are shown below. The examined cases are: the case where an acrylic undercoat layer is formed on an acrylic board, a first coating comprising amorphous titanium peroxide is formed after the undercoat layer is subjected to a corona discharge treatment by use of an apparatus as shown in Fig. 3, and second coating comprising anatase titanium oxide sol is applied thereto; the case where an undercoat layer is subjected to a corona discharge treatment, and then an aqueous coating agent of a general grade such as a conventional silicone-based coating agent or a fluoroplastic-based coating agent is applied; and the case where a coating is formed by using an aqueous coating agent of a general grade containing a surfactant which has an effect to improve wettability of the coating, without any dry treatment.

**Table 1:**

| | Coating Agent | Dry Treatment | Wettability | Contacting Angle | Stain Degree |
|---|---|---|---|---|---|
| Present Invention | Titanium Oxide / Titanium Peroxide | Corona Discharge Treatment | ⓞ | ⓞ | ⓞ |
| Comp. Ex. | Coating Agent of general grade | Corona Discharge Treatment | ○ | ○ | ○ |
| Comp. Ex. | Coating Containing Surfactant | No Treatment | Δ | Δ | Δ |

It can be seen from Table 1 that the dry treatment in the process for forming a coating of the present invention gives better results as regards wettability, contacting angle and stain degree even when the aqueous coating of a general grade is used, in comparison to the case where the aqueous coating containing a surfactant is used, and that all the wettability, contacting angle and stain degree are extremely excellent in the case where the first coating containing amorphous titanium peroxide sol and the second coating containing anatase titanium oxide are successively formed.

The present invention further relates to an antifouling material having an antifouling coating, manufactured by forming the antifouling coating comprising a photocatalyst and amorphous titanium peroxide with substantially no photocatalytic capability on a treatment face of a substrate having a surface made of a plastic or a rubber.

As a substrate, a wheel (aluminum wheel, steel wheel or the like) for an automobile such as a car and a two-wheeled vehicle having a plastic coating made of acrylic resin, fluoroplastics, or a mixture thereof on a surface of the wheel. Wheels of an automobile are extremely easily stained by worn tailings (rubbed pieces) of a brake pad or the like, or a combustion product such as smoke or exhaust gas. Moreover, it takes much time or burden to eliminate stain from the wheels of the automobiles. The wheel for an automobile, on which the antifouling coating comprising photocatalyst of the invention is provided, has excellent hydrophilic function and antifouling function when the sunlight is irradiated thereto. When the sunlight is not irradiated, the wheel has an excellent hydrophilic function, although there is no antifouling function. Particularly when the first coating containing amorphous titanium peroxide is formed, excellent hydrophilic function and antifouling function are maintained over a long period of time without deterioration of hydrophilic effect.

Furthermore, a tire for an automobile is also preferable as the substrate. In recent years, the number of automobiles is increased. Accompanying this fact, effects of air pollutants such as hydrocarbons, carbon monoxide and nitrogen oxide included in exhaust gas is concerned about. In the tire for an automobile according to the present invention wherein the antifouling coating containing a photocatalyst is provided at a side part, the photocatalyst in the antifouling coating reacts with an air pollutant in the exhaust gas such as nitrogen oxide to make the air pollutant harmless. Accordingly, it is possible to decrease air pollutants in the exhaust gas.

Here, it possible to directly use sunlight as a light source for optical excitation of the photocatalyst. For imparting hydrophilic nature to the surface of the substrate, the luminous intensity is set 0.001 mw/cm² or more, preferably 0.001 mw/cm² or more, most preferably 0.1 mw/cm².

### [Examples]

### A: Evaluation on film forming properties and antifouling properties

### A-1: Plasma discharge treatment

### Example 1

### (1) Preparation of substrate

A substrate was made by applying an acrylic resin coating agent (clear acrylic resin coating agent, manufactured by NIPPON PAINT Co., Ltd.) to have a thickness of 30µm to an aluminum plate with a size of 50 × 100 × 2 mm. Thereafter, baking was carried out at 160°C for 60 minutes.

### (2) Plasma discharge treatment.

The plasma discharge treatment was carried out by using a plasma discharge treatment apparatus as shown in Fig. 1. After fat was removed from the surface (treatment face) of the acrylic resin of the substrate with ethanol, the substrate was introduced into a glass chamber having a size of 10×10×30 mm. The chamber was evacuated, subsequently filled with O₂ gas up to 1 torr, and a plasma discharge treatment was carried out by the application of voltage with an output of 100 W for 10 minutes.

### (3) Measurement of contacting angle

Contacting angles were measured by using a contact angle meter. The results are shown in Table 2. Contact Angle Meter CA-X manufactured by Kyowa Interface Science Co., Ltd. was used.

### (4) Formation of first coating (TiO₃ layer)

An amorphous titanium peroxide sol solution (TK-100, an aqueous solution containing 0.85 % (based on mass) of titanium peroxide, manufactured by TOA) for a first coating was uniformly applied by spray coating to the treatment face after plasma discharge treatment, and dried at room temperature. This operation was repeated three times.

### (5) Formation of second coating (TiO₂/TiO₃ layer)

A mixed liquid for a second coating containing amorphous titanium peroxide and anatase titanium oxide (TAK-70, an aqueous solution containing 1.70 % (based on mass) of titanium oxide and titanium peroxide, titanium oxide : titanium peroxide = 7 : 3, manufactured by TAO) was uniformly applied by spray coating to the above-mentioned first layer, and dried at room temperature. This operation was repeated three times.

### (5) Decomposition properties of stain

As an indication of stain, a red ink (PILOT Corporation), which has been diluted with water by 20 fold, was applied to the surface, UV radiation was irradiated, and the color difference was evaluated by a color difference meter (CM508d manufactured by MINOLTA Co., Ltd.). The evaluation was performed by measuring E₀, a value before being stained, and calculating the difference ΔE between E₀ and E₁, a value after being stained. The result shows that the larger the value ΔE, the heavier the stain.

### Example 2

The same experiment as in Example 1 was carried out except that O₂ gas as a surrounding gas for plasma discharge treatment was replaced by N₂ gas.

### Example 3

The same experiment as in Example 1 was carried out except that that O₂ gas as a surrounding gas for plasma discharge treatment was replaced by Ar gas.

### Comparative Example 1

The same experiment as in Example 1 was carried out except that the plasma discharge treatment, formation of the first layer, and formation of the second layer were not carried out.

The results of Examples 1 to 3 and Comparative Example 1 are shown below:

**Table 2:**

| | Example 1 | Example 2 | Example 3 | Comp. Ex.1 |
|---|---|---|---|---|
| Gas Sort | O₂ | N₂ | Ar | -- |
| Contact Angle (degree) | 23 | 32 | 35 | 60 |
| Film Forming Properties | Good | Good | Good | Coating cannot be applied by repelling |
| Color Difference ΔE (1 hour later) | 1 | 6 | 8 | 10 |
| Result | ⓞ | ○ | ○ | × |

As shown in Table 2, when the plasma discharge treatment was carried out in accordance with the process for forming the coating of the present invention, treatment faces with small contacting angles and large wettabilities are obtained, that is, the excellent film forming properties was obtained. Furthermore, a strongly adhered uniform coating was formed on the treatment face. Therefore, it can be seen that excellent antifouling effect was obtained. Here, it was impossible to form a coating by the application of the aqueous coating containing amorphous titanium peroxide to the treatment face to which plasma discharge treatment had not been applied.

### A-2: Ultraviolet irradiation treatment

### Example 4

The same experiment as in Example 1 was carried out except that plasma discharge treatment was replaced by an ultraviolet irradiation treatment as follows:

The ultraviolet irradiation treatment was carried out by using an ultraviolet irradiation apparatus as shown in Fig. 2. After fat was removed from the surface (treatment face) of the acrylic resin with ethanol, water was applied to the treatment face. Ultraviolet irradiation treatment was carried out in the air under normal pressure for 5 minutes by use of a 110 W low pressure UV lamp, SLTV110GS-36 manufactured by SEN Engineering with maintaining a distance between the treatment face and the low pressure UV lamp to be 1.5 cm.

### Example 5

The same experiment as in Example 4 was carried out except that water was not applied to the treatment face after removing fat on the acrylic resin surface (treatment face) with ethanol before ultraviolet irradiation treatment.

### Comparative Example 2

The same experiment as in Example 4 was carried out except that the ultraviolet irradiation treatment, formation of the first layer, and formation of the second layer were not carried out.

The result of Examples 4 and 5 and Comparative Example 2 are compiled below:

**Table 3:**

| | Example 4 | Example 5 | Comp. Ex. 2 |
|---|---|---|---|
| Substrate Surface | Acryl | Acryl | Acryl |
| UV Irradiation Treatment | ○ | ○ | × |
| Water application for Treatment | ○ | × | × |
| Contact Angle (deg.) Before UV Irradiation | 80 | 80 | 80 |
| Treatment After UV Irradiation Treatment | 28 | 48 | - |
| Film Forming Properties | Extremely Good | Good | Coating cannot be applied by repelling |
| Color Difference ΔE (1 hour later) | 3 | 4 | 8 |
| Result | ⓞ | ○ | × |

As shown in Table 3, when the ultraviolet irradiation treatment was carried out in accordance with the process for forming the coating of the present invention, treatment faces with small contacting angles and large wettabilities are obtained, that is, excellent film forming properties were obtained. Furthermore, a strongly adhered uniform coating was formed on the treatment face. Therefore, it can be seen that excellent antifouling effect was obtained. Particularly when water is applied to the treatment face before the ultraviolet irradiation treatment, excellent results are obtained. Here, it was impossible to form a coating by the application of the aqueous coating containing amorphous titanium peroxide to the treatment face to which ultraviolet irradiation treatment has not been applied.

### B: Application to wheel of automobile

### Example 6 (plasma discharge treatment)

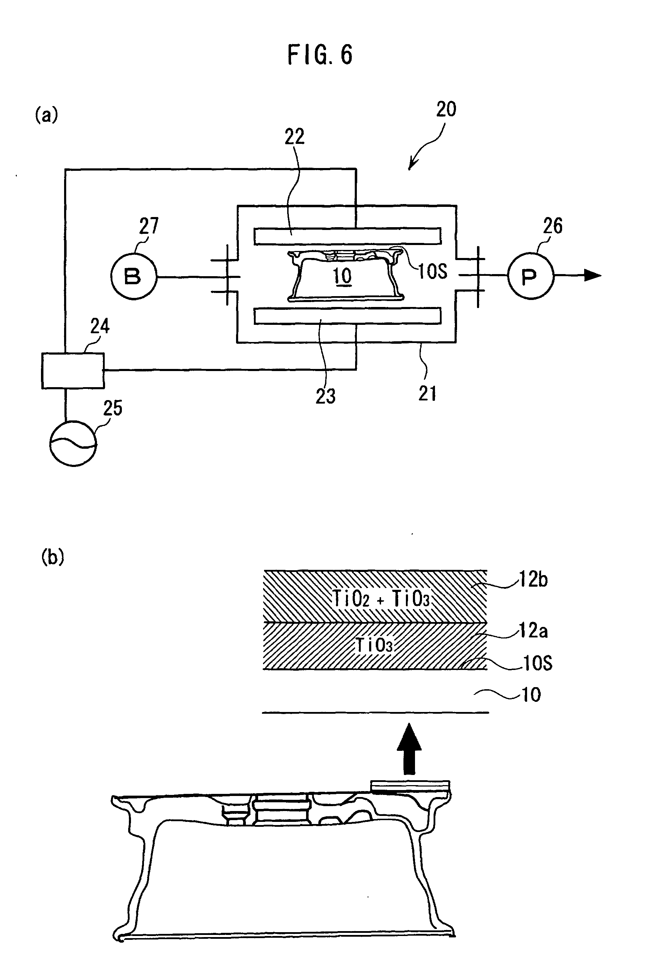

Acrylic resin coating agent (clear acrylic resin coating agent, manufactured by NIPPON PAINT Co., Ltd.) was applied by spray coating to the surface of an aluminum wheel, baked at 140°C for 20 minutes, and then plasma discharge treatment was applied thereto as shown in Fig. 6 (a). The plasma discharge treatment was carried out by introducing the above-mentioned aluminum wheel to a glass chamber, the chamber was evacuated, filled with Ar gas up to a pressure of 1 torr, and a voltage with an output of 100W was applied thereto for 10 minutes.

Subsequently, an amorphous titanium peroxide sol solution (TK-100, an aqueous solution containing 0.85 % (based on mass) of titanium peroxide, manufactured by TOA) for a first coating was uniformly applied by spray coating to the treatment face after plasma discharge treatment, and dried at room temperature. This operation was repeated three times. Further, a mixed liquid for a second coating containing amorphous titanium peroxide and anatase titanium oxide (TAK-70, an aqueous solution containing 1.70 % (based on mass) of titanium oxide and titanium peroxide, titanium oxide : titanium peroxide = 7:3, manufactured by TAO) was uniformly applied by spray coating to the above-mentioned first layer, and dried at room temperature. This operation was repeated three times. Finally, baking was carried out in an oven at 160°C for one hour, whereby an aluminum wheel was obtained which has photocatalytic activity (i.e., hydrophilic nature and organic product decomposition properties) on the surface. The thus obtained wheel having the antifouling coating is shown in Fig. 6(b). For comparison, a wheel was prepared, to which the above-mentioned acrylic resin coating agent was applied by spray coating, and baking was carried out at 140 °C for 20 minutes, without carrying out corona discharge treatment or film formation.

The thus obtained wheel was installed to an automobile, and the stain after driving 1000 km was measured by a color difference meter (MINOLTA CM-508d). E₀, a value before driving, was measured in advance. The degree of the stain was evaluated based on the difference Δ E between E₀ and E₁, a value after driving The results are shown below. The evaluation shows that the larger the value ΔE, the heavier the stain.

**Table 4:**

| Dry Treatment | ΔE |
|---|---|
| Plasma Discharge Treatment | 1.09 |
| Not treated | 8.03 |

It was observed that reddish brown stain such as powder from a brake or mud was adhered to the untreated wheel. To the contrary, stain was hardly observed on the wheel after being subjected to the process for forming a coating of the present invention. It was confirmed that stain or the like was not adhered to the surface of the wheel of the present invention because the decomposition/disintegration function and hydrophilic function of the photocatalyst were manifested.

### Example 7 (Corona Discharge)

Acrylic resin coating agent (clear acrylic resin coating agent, manufactured by NIPPON PAINT Co., Ltd.) was applied to the surface of an aluminum wheel by spray coating, baked at 140°C for 20 minutes, and then corona discharge treatment was applied thereto. The plasma discharge treatment was carried out in the air for 10 minutes by use of a corona discharge treatment apparatus as shown in Fig. 3 under the conditions of electrode distance d = 1 mm, frequency f = 40 kHz and voltage V = 14 kV during high-frequency voltage application.

Subsequently, an amorphous titanium peroxide sol solution (TK-100, an aqueous solution containing 0.85 % (based on mass) of titanium peroxide, manufactured by TOA) for a first coating was uniformly applied by spray coating to the treatment face after corona discharge treatment, and dried at room temperature. This operation was repeated three times. Further, a mixed liquid for a second coating containing amorphous titanium peroxide and anatase titanium oxide (TAK-70, an aqueous solution containing 1.70 % (based on mass) of titanium oxide and titanium peroxide, titanium oxide : titanium peroxide = 7:3, manufactured by TAO) was uniformly applied by spray coating, and dried at room temperature. This operation was repeated three times. Finally, baking was carried out in an oven at 160°C for one hour, whereby an aluminum wheel was prepared which has photocatalytic activity (i.e., hydrophilic nature and organic product decomposition properties) on the surface. For comparison, a wheel was prepared, to which the above-mentioned acrylic resin coating agent was applied by spray coating, and baking at 140 °C was carried out for 20 minutes, without carrying out corona discharge treatment or film formation.

The thus obtained wheel was installed to an automobile, and the stain after driving 5000 km was measured by a color difference meter (MINOLTA CM-508d). E₀, a value before driving, was measured in advance. The degree of the stain was evaluated based on the difference Δ E between E₀ and E₁, a value after driving. The results are shown below. The evaluation shows that the larger the value ΔE, the heavier the stain.

**Table 5:**

| Dry Treatment | ΔE |
|---|---|
| Corona Discharge Treatment | 0.4 |
| Not treated | 4.5 |

It was observed that reddish brown stain such as powder from a brake or mud was adhered to the untreated wheel. To the contrary, stain was hardly observed on the wheel after being subjected to the process for forming a coating of the present invention. It was confirmed that stain or the like was not adhered to the surface of the wheel of the present invention because the decomposition/disintegration function and hydrophilic function of the photocatalyst were manifested.

### Example 8 (UV irradiation treatment)

Acrylic resin coating agent (clear acrylic resin coating agent, manufactured by NIPPON PAINT Co., Ltd.) was applied to the surface of an aluminum wheel by spray coating, baked at 140°C for 20 minutes, and then ultraviolet irradiation treatment was applied thereto. The ultraviolet irradiation treatment was carried out by use of an ultraviolet irradiation treatment apparatus as shown in Fig. 2. The ultraviolet irradiation treatment was carried out in the air under normal pressure for 5 minutes by use of a 110 W low-pressure UV lamp SLTV110GS-36 by maintaining the distance between the resin surface of the wheel and the low pressure UV lamp to be 1.5 cm.

Subsequently, an amorphous titanium peroxide sol solution (TK-100, an aqueous solution containing 0.85 % (based on mass) of titanium peroxide, manufactured by TOA) for a first coating was uniformly applied by spray coating to the treatment face after ultraviolet irradiation treatment, and dried at room temperature. This operation was repeated three times. Further, a mixed liquid for a second coating containing amorphous titanium peroxide and anatase titanium oxide (TAK-70, an aqueous solution containing 1.70 % (based on mass) of titanium oxide and titanium peroxide, titanium oxide : titanium peroxide = 7:3, manufactured by TAO) was uniformly applied by spray coating, and dried at room temperature. This operation was repeated three times. Finally, baking was carried out in an oven at 160°C for one hour, whereby an aluminum wheel was prepared which has photocatalytic activity (i.e., hydrophilic nature and organic product disintegration properties) on the surface. For comparison, a wheel was prepared, to which the above-mentioned acrylic resin coating agent was applied by spray coating, and baking at 140 °C was carried out for 20 minutes, without carrying out ultraviolet irradiation treatment or film formation.

The thus obtained wheel was installed to an automobile, and the stain after driving 1200 km was measured by a color difference meter (MINOLTA CM-508d). E₀, a value before driving, was measured in advance. The degree of the stain was evaluated based on the difference Δ E between E₀ and E₁, a value after driving. The results are shown below. The evaluation shows that the larger the value ΔE, the heavier the stain.

**Table 6:**

| Dry Treatment | ΔE |
|---|---|
| UV Irradiation Treatment | 1.01 |
| Not treated | 6.12 |

It was observed that reddish brown stain such as powder of a brake or mud was adhered to the untreated wheel. To the contrary, stain was hardly observed on the wheel after being subjected to the process for forming a coating of the present invention. It was confirmed that stain or the like was not adhered to the surface of the wheel of the present invention because the decomposition/disintegration function and hydrophilic function of the photocatalyst were manifested.

### C: Application to a tire of an automobile

### Example 9 (Corona discharge treatment)

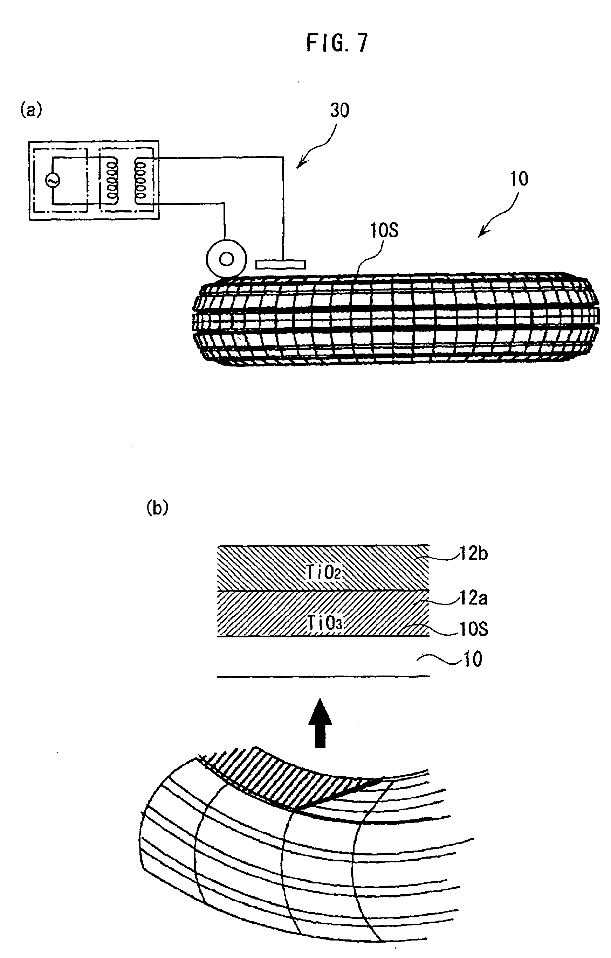

A corona discharge treatment as shown in Fig. 7(a) was applied to a side part of a tire of an automobile. The corona discharge treatment was carried out in the air for 10 minutes under the conditions of electrode distance d = 1 mm, frequency f = 40 kHz and voltage V = 14 kV during high-frequency voltage application.

Subsequently, an amorphous titanium peroxide sol solution (TK-100, an aqueous solution containing 0.85 % (based on mass) of titanium peroxide, manufactured by TOA) for a first coating was uniformly applied by spray coating to the treatment face after corona discharge treatment, and dried at room temperature. This operation was repeated three times. Further, an aqueous solution of anatase titanium oxide sol as the second coating was uniformly applied by spray coating, and dried at room temperature. This operation was repeated three times. Thereafter, baking was carried out in an oven at 80°C for one hour, whereby a tire was prepared which has photocatalytic activity (i.e., hydrophilic nature and organic product decomposition properties) on the side part. The thus obtained tire having the antifouling coating is shown in Fig. 7(b).

The tire was introduced into a 1m³ chamber, and the chamber as charged with nitrogen oxide gas having initial concentrations of 4 ppm, 8 ppm and 12 ppm. An ultraviolet radiation was irradiated to the above-mentioned tire by using black light (8W, 13 mW/cm²) as a light source. After one hour and 2 hours, the change of the nitrogen oxide concentration in the chamber was measured by use of U shaped gas detector tube (Kitagawa nitrogen oxide detector tube)

### Example 10 (Corona discharge treatment)

The same procedure as in Example 9 was repeated except that the formation of the antifouling coating after the corona discharge treatment was changed. The antifouling coating was formed as follows:

An amorphous titanium peroxide sol solution (TK-100, an aqueous solution containing 0.85 % (based on mass) of titanium peroxide, manufactured by TOA) for a first coating was uniformly applied by spray coating to the treatment face after corona discharge treatment, and dried at room temperature. This operation was repeated three times. Further, a mixed liquid for a second coating containing amorphous titanium peroxide and anatase titanium oxide (TAK-70, an aqueous solution containing 1.70 % (based on mass) of titanium oxide and titanium peroxide, titanium oxide : titanium peroxide = 7:3, manufactured by TAO) was uniformly applied by spray coating, and dried at room temperature. This operation was repeated three times. Finally, baking was carried out in an oven at 80°C for one hour.

### Example 11 (Plasma discharge treatment)

The same procedure as in Example 10 was repeated except that corona discharge treatment was replaced by plasma discharge treatment. The plasma discharge treatment was carried out by using a plasma discharge treatment apparatus as shown in Fig. 1. The above-mentioned tire was introduced in a glass chamber, chamber was evacuated and then filled with Ar gas up to a pressure 1 torr. Plasma discharge treatment was performed by the application of voltage with an output of 100 W for 10 minutes.

### Example 12 (Ultraviolet discharge treatment)

The same procedure as in Example 10 was repeated except that plasma discharge treatment was replaced by ultraviolet discharge treatment. The ultraviolet treatment was carried out by use of a 110 W low-pressure UV lamp SUV 110GS-36 manufactured by SEN Engineering in the air under normal pressure for 5 minutes with maintaining the distance between the surface of the tire and the low pressure UV lamp to be 1.5 cm.

### Comparative Example 3

The procedure as in Example 9 was repeated except that dry treatment and film formation were not carried out. The results of Examples 9 to 11 and Comparative Example 3 are shown below.

**Table 7:**

| Dry treatment | | Initial Concentration | One hour later | Two hours later |
|---|---|---|---|---|
| Example 9 Corona discharge treatment 2nd coating TiO₂ | (1) | 4 ppm | 2 ppm | 2 ppm |
| | (2) | 8 ppm | 5 ppm | 4 ppm |
| | (3) | 12 ppm | 8 ppm | 7 ppm |
| Example 10 Corona discharge treatment 2nd coating TiO₂/TiO₃ | (1) | 4 ppm | 2 ppm | 2 ppm |
| | (2) | 8 ppm | 6 ppm | 4 ppm |
| | (3) | 12 ppm | 9 ppm | 7 ppm |
| Example 11 Plasma discharge treatment 2nd coating TiO₂/TiO₃ | (1) | 4 ppm | 3 ppm | 2 ppm |
| | (2) | 8 ppm | 5 ppm | 4 ppm |
| | (3) | 12 ppm | 7 ppm | 6 ppm |
| Example 12 UV irradiation treatment 2nd coating TiO₂/TiO₃ | (1) | 4 ppm | 2 ppm | 1 ppm |
| | (2) | 8 ppm | 4 ppm | 4 ppm |
| | (3) | 12 ppm | 8 ppm | 7 ppm |
| Comparative Example 13 Not treated | (1) | 4 ppm | 4 ppm | 4 ppm |
| | (2) | 8 ppm | 8 ppm | 8 ppm |
| | (3) | 12 ppm | 12 ppm | 12 ppm |

As can be seen from Table 7, the change of nitrogen oxide concentration was not observed in the non-treated tire. To the contrary, the nitrogen oxide concentration was decreased in the tires wherein the coatings of the photocatalyst were formed by the process for forming the coating of the present invention. It was confirmed that the tire of the present invention can decrease the concentration of nitrogen oxide in the exhaust gas of an automobile.

### [Effect of the Invention]

According to a process for forming an antifouling coating of the present invention, a dry treatment is applied to a plastic or a rubber surface of a substrate wherein a hydrophilic group having a high reactivity is introduced, and thereafter an antifouling layer comprising a photocatalyst and amorphous titanium peroxide with substantially no catalytic capability is formed. Therefore, a uniform antifouling coating which is firmly adhered to a treatment face is formed. The coating which has not only with improved hydrophilic properties and weather resistance, but also excellent sealing properties, film forming properties and transparency. Furthermore, the plastic or rubber on the surface of the substrate never decomposes.

In addition to the above, an antifouling material having the antifouling coating of the present invention has a uniform antifouling coating comprising a photocatalyst and amorphous titanium peroxide, which coating is strongly adhered to a treatment face. Therefore, it is possible to perform purification of air, deodorization, purification of water, antibacterial treatment, and self-cleaning in a stable condition for a long period of time by use of decomposition function and hydrophilic nature imparting function of the photocatalyst.

## Claims

1. A process for forming an antifouling coating comprising a photocatalyst and amorphous titanium peroxide with substantially no photocatalytic capability provided on a treatment face of a substrate having a surface made of a plastic or a rubber, comprising:
a step of performing dry treatment for introducing a hydrophilic group to the treatment face of said substrate, and
a step of forming said antifouling coating by applying an aqueous coating agent comprising said photocatalyst and said amorphous titanium peroxide with substantially no photocatalytic capability to the treatment face of said substrate after said dry treatment.

2. The process for forming an antifouling coating as claimed in claim 1, wherein said step of forming said antifouling coating comprises:
a step of forming a first coating by applying an aqueous coating agent comprising said amorphous titanium peroxide with substantially no photocatalytic capability to said treatment face after said dry treatment; and
a step of forming a second coating by applying an aqueous coating agent comprising said photocatalyst to said first coating.

3. The process for forming an antifouling coating as claimed in claim 2, wherein said first coating further comprises amorphous titanium oxide with substantially no photocatalytic capability.

4. The process for forming an antifouling coating as claimed in claim 2 or 3, wherein said first coating has a thickness in the range of 0.02 to 4 µm.

5. The process for forming an antifouling coating as claimed in any of claims 2 to 4, wherein said second coating further comprises amorphous titanium peroxide with substantially no photocatalytic capability.

6. The process for forming an antifouling coating as claimed in any of claims 2 to 5, wherein said first coating has a thickness in the range of 0.02 to 4 µm.

7. The process for forming an antifouling coating as claimed in any of claims 1 to 6, wherein said photocatalyst is titanium oxide.

8. The process for forming an antifouling coating as claimed in any of claims 1 to 7, wherein said antifouling coating further comprises a surfactant and/or a hydrophilic nature imparting agent.

9. The process for forming an antifouling coating as claimed in any of claims 1 to 8, wherein said dry treatment is a plasma discharge treatment.

10. The process for forming an antifouling coating as claimed in claim 9 wherein said plasma discharge treatment is carried out in an atmosphere of argon, oxygen or nitrogen.

11. The process for forming an antifouling coating as claimed in any of claims 1 to 8, wherein said dry treatment is an ultraviolet irradiation treatment.

12. The process for forming an antifouling coating as claimed in claim 11, wherein ultraviolet radiation used in said ultraviolet irradiation treatment has a wavelength in the range of 150 to 365 nm.

13. The process for forming an antifouling coating as claimed in claims 11 or 12, wherein said ultraviolet irradiation treatment is carried out in an atmosphere of water vapor or ozone.

14. The process for forming an antifouling coating as claimed in any of claims 11 to 13, wherein said ultraviolet treatment is carried out after water is applied to said treatment face.

15. The process for forming an antifouling coating as claimed in any of claims 1 to 8, wherein said dry treatment is a corona discharge treatment.

16. The process for forming an antifouling coating as claimed in claim 15, wherein said corona discharge treatment is carried out by use of a corona discharge treatment apparatus comprising two electrodes, either one of said two electrodes being covered with an insulating material, said two electrodes positioned in the vicinity of said treatment face, said corona discharge treatment being carried out so that a corona generated by applying a high-frequency voltage between said two electrodes contacts said treatment face.

17. The process for forming an antifouling coating as claimed in claim 16, wherein said two electrodes are spaced from one another in a range of 1 to 5 mm.

18. The process for forming an antifouling coating as claimed in claim 16 or 17, wherein a high-frequency voltage with a frequency in the range of 15 to 50 kHz, and a voltage in the range of 5 to 25 kV is applied between said two electrodes.

19. An antifouling material having an antifouling coating, said antifouling material comprising a substrate having a surface made of a plastic or a rubber, and a antifouling coating comprising a photocatalyst and amorphous titanium peroxide with substantially no photocatalytic capability is provided on a treatment face of said substrate, said antifouling coating being prepared by:
a step of performing dry treatment for introducing a hydrophilic group to said treatment face of said substrate, and
a step of forming said antifouling coating by applying an aqueous coating agent comprising said photocatalyst and said amorphous titanium peroxide with substantially no photocatalytic capability to said treatment face of said substrate after said dry treatment.

20. The antifouling material having an antifouling coating as claimed in claim 19, wherein said step of forming said antifouling coating comprises:
a step of forming a first coating by applying an aqueous coating agent comprising said amorphous titanium peroxide with substantially no photocatalytic capability to said treatment face after said dry treatment; and
a step of forming a second coating by applying an aqueous coating agent comprising said photocatalyst to said first coating.

21. The antifouling material having an antifouling coating as claimed in claims 19 or 20, wherein said photocatalyst is titanium oxide.

22. The antifouling material having an antifouling coating as claimed any of claims 19 to 21, wherein said dry treatment is any of plasma discharge treatment, ultraviolet irradiation treatment and corona discharge treatment.

23. The antifouling material having an antifouling coating as claimed any of claims 19 to 22, wherein said substrate is a tire.

24. The antifouling material having an antifouling coating as claimed in any of claims 19 to 22, wherein said substrate is a wheel for an automobile having a plastic covering layer on a surface of the wheel.

25. The antifouling material having an antifouling coating as claimed in claim 24, wherein said plastic covering layer is made of any of acrylic resin, fluoroplastics, and a mixture thereof.
